# EUROPEAN PATENT SPECIFICATION

(11) **EP 3 472 258 B1**
(45) Date of publication and mention of the grant of the patent: **24.02.2021**
(21) Application number: 17734133.6
(22) Date of filing: 14.06.2017
(51) Int. Cl.: C09K 5/10

(54) **COOLING SYSTEM TREATMENT**
BEHANDLUNG EINES KÜHLSYSTEMS
TRAITEMENT D'UN SYSTÈME DE REFROIDISSEMENT

(30) Priority: 15.06.2016 GB 201610403
(43) Date of publication of application: 24.04.2019
(73) Proprietor: Liquitherm Technologies Group Limited, Swansea SA5 4AJ (GB)
(72) Inventor: HICKSON, Stephen J, Swansea SA5 4AJ (GB)
(74) Representative: Murgitroyd & Company
(86) International application number: PCT/GB2017/051737
(87) International publication number: WO 2017/216556

(56) References cited:
- US-A1- 2002 033 470
- US-B2- 8 431 038

## Description

The present invention concerns a method of detoxification treatment of liquid-cooled internal combustion engine cooling systems.

Most liquid-cooled engines use as the heat exchange fluid a mixture of water and chemicals such as antifreeze and rust inhibitors. Such a mixture is known as an "engine coolant" or, simply, coolant (or coolant liquid). Ethylene glycol has proved over many years to be an efficient and cost effective means of providing freezing and boiling protection for engine coolants. This is largely because, when ethylene glycol is added to water, the freezing point of the mixture is reduced to a safe level for cold weather. For example, a mixture of 50% water and 50% ethylene glycol has a freezing point of minus 35.6°C.

The vast majority of automotive and other internal combustion engine cooling systems therefore use as the coolant liquid a mixture of ethylene glycol (as antifreeze) and water - typically in a mixture comprising 30 to 70% by volume of water and 70 to 30% by volume of ethylene glycol (the proportion of ethylene glycol being determined by the severity of the local winter climate - a greater proportion of glycol being indicated in more severe winter climate zones).

While ethylene glycol has served effectively in engine coolants, it has one major disadvantage - namely its toxicity to humans and other mammals if ingested. Specifically, ethylene glycol has an LD₅₀ value for rats of about 4700 mg/kg (an LD₅₀ value for rats of less than or equal to 5000 mg/kg is classified as hazardous). Thus aqueous coolants containing ethylene glycol present danger of accidental ingestion by humans or animals and every year there are recorded numerous cases of accidental and deliberate poisonings of humans and animals.

Propylene glycol and glycerol (both of which are polyhydric alcohols of boiling point above 150°C) have much higher LD₅₀ values for rats than ethylene glycol does - namely about 20,000 mg/kg for propylene glycol and about 13,000 mg/kg for glycerol. Both are classified as essentially non-toxic and have even been approved as food additives by the US Food and Drugs Administration and similar bodies.

Ethylene glycol based coolant liquids in which part of the ethylene glycol has been replaced by such polyhydric alcohols have been proposed in US Patent 8431038 B2. The resultant coolant liquid is therefore a mixture; as described in the abovementioned US patent, there is a known formula whereby the LD₅₀ of a mixture (such as a coolant liquid) containing substances having known LD₅₀ values can be estimated (see also paragraph 0042 of EP1320575 B1 where the same known formula is described). The formula, as approved by the World Health Organization, can be used to calculate the LD₅₀ for rats of a mixture used as a coolant liquid - and this calculation can be used to predetermine the amount of the polyhydric alcohol to be employed in the coolant liquid mixture.

Because of the known toxicity of ethylene glycol, it would be desirable if all cooling systems using coolant liquids based on ethylene glycol could be drained and the coolant liquid replaced by a non-toxic coolant containing a polyhydric alcohol. However, it would be onerous and unrealistic to require all such coolants currently in use to be replaced; and the calculation of the LD₅₀ value of the mixture can be challenging. In the prior art US 2002/033470 A1 discloses a method for rendering an ethylene glycol based heat transfer fluid non-toxic comprising the steps of:(a) providing an ethylene glycol based heat transfer fluid; and(b) adding a sufficient amount of a diol, the diol being is propylene glycol. US 8 431 038 B2 discloses methods for reducing the toxicity of existing fluids containing ethylene glycol by the addition a polyhydric alcohol.

We have therefore devised a method which permits part only of the coolant in a coolant system to be replaced, while still achieving the advantage of an essentially non-toxic coolant, and without the need for challenging calculations.

According to the invention, therefore, there is provided a method of rendering less hazardous (detoxifying) a coolant system containing a coolant liquid comprising water and ethylene glycol, which comprises the steps of:
(a) withdrawing a predetermined quantity of the coolant liquid from the coolant system, the predetermined quantity being from 8 to 15% of the volume of the coolant system;
(b) replenishing the coolant system with a top-up mix comprising at least 90% by volume of a polyhydric alcohol having a boiling point above 150°C that has reactivity as an alcohol dehydrogenase enzyme inhibitor (such as propylene glycol and/or glycerol), substantially all the remainder of the top-up mix comprising corrosion inhibitor, water and incidental ingredients, the amount of the top-up mix being at least 90% by volume (preferably 100%) of the predetermined quantity withdrawn in step (a).

The polyhydric alcohol having a boiling point above 150°C that has reactivity as an alcohol dehydrogenase enzyme inhibitor is preferably propylene glycol. Propylene glycol has a boiling point at ambient pressure of 188.2°C. If glycerol is used, it is preferably in admixture with propylene glycol in an amount of up to 35% by volume of the mixture. Glycerol has a boiling point at ambient pressure of 290°C.

It is preferred that ethylene glycol should be absent from the top-up mix, but a small amount may be tolerated, such as no more than 5% by volume. It is further preferred that water should be absent from the top-up mix, but again a small amount may be tolerated, such as no more than 5% by volume.

By "coolant system", we mean herein the entire apparatus through the internal volume of which the coolant liquid can circulate, including one or more radiators and a pump, as well as any associated pipework and expansion chambers. The radiator(s) generally provides the majority of the volume capacity of the coolant system. It is particularly preferred that the coolant system is that of an internal combustion engine.

In the method according to the invention, if the capacity of the coolant system is approximately 8 litres, then generally 0.9 to 1.0 litre of the coolant liquid is withdrawn is step (a), and substantially the same amount of top-up mix is then supplied to replenish the coolant system during step (b).

The coolant liquid initially present in the coolant system typically comprises 30 to 70% by volume of ethylene glycol and 70 to 30% water, the liquid further having dissolved therein one or more conventional additives, such as corrosion inhibitors, buffers, cavitation inhibitors, defoamers, scale inhibitors, chelates, surfactants, and dyes.

The top-up mix generally further contains in addition one or more corrosion inhibitors for inhibiting corrosion of the coolant system. Examples of such corrosion inhibitors include molybdates, phosphates, nitrites, nitrates, silicates, borates and organic acids, as will be generally known in the art.

The top-up mix may also contain incidental ingredients such as a taste denaturant (bitterant) and a dye. It is advantageous to use a dye so that the top-up mix can be visually distinguished from the coolant liquid withdrawn from the coolant system.

It will be recognised that the coolant liquid withdrawn from the coolant system in step (a) would be hazardous to health of humans and animals. In a particularly advantageous embodiment of the invention, therefore, it is preferred that the withdrawn liquid be mixed immediately with a formulation containing a polyhydric alcohol having a boiling point above 150°C that acts as an alcohol dehydrogenase enzyme inhibitor (such as propylene glycol and/or glycerol), in an amount sufficient to render the LD₅₀ value for rats of the resulting mix no more than 10,000 mg/kg.

The method of the invention can be carried out with a kit for rendering less hazardous (detoxifying) a coolant system containing a coolant liquid comprising water and ethylene glycol, the kit comprising:
a first container containing a predetermined volume of top-up mix comprising at least 90% by volume of a polyhydric alcohol having a boiling point above 150°C that acts as an alcohol dehydrogenase enzyme inhibitor (such as propylene glycol and/or glycerol), substantially all the remainder of the top-up mix comprising corrosion inhibitor and incidental ingredients; and
a second container having a capacity to receive a volume of coolant liquid withdrawn from the coolant system equal to the predetermined volume, the second container containing a detoxifying liquid comprising a polyhydric alcohol having a boiling point above 150°C and reactivity as an alcohol dehydrogenase enzyme inhibitor (such as propylene glycol and/or glycerol), the detoxifying liquid being for mixing with the withdrawn coolant liquid, and being present in the second container in an amount such that the resultant mix substantially fills the second container (that is, to an amount of at least 95% by volume of the second container).

The polyhydric alcohol in both the first and second containers preferably comprises propylene glycol; it is especially preferred that the polyhydric alcohol in both containers consists of propylene glycol. In those embodiments where glycerol is used in either the first or second container, the glycerol is preferably in admixture with propylene glycol, the glycerol being present in an amount of up to 35% by volume of the total quantity of polyhydric alcohol. The detoxifying liquid in the second container preferably contains no corrosion inhibitor or other hazardous materials. This means that, after use, the contents of the second container may be safely be disposed of.

The kit according to the invention preferably further comprises a calibrated pump, syringe or the like, for removing the predetermined volume of the coolant liquid.

Both the first and second containers are preferably provided with removable and replaceable (resealable) closures, such as respective lids when the containers are bottles or the like.

The kit can be used to detoxify the coolant system, and to permit liquid withdrawn to be safely disposed of, without the need for challenging calculations based on the LD₅₀ value.

## Claims

1. A method of detoxifying a coolant system containing a coolant liquid comprising water and ethylene glycol, which method comprises the steps of:
(a) withdrawing a predetermined volume of the coolant liquid from the coolant system, the predetermined amount being from 8 to 15% of the volume of the coolant system;
(b) replenishing the coolant system with a top-up mix comprising at least 90% by volume of a polyhydric alcohol having a boiling point above 150°C and reactivity as an alcohol dehydrogenase enzyme inhibitor, substantially all the remainder of the top-up mix comprising corrosion inhibitor, water and incidental ingredients, the amount of the top-up mix being at least 90% by volume of the predetermined volume withdrawn in step (a).

2. A method according to claim 1, wherein the polyhydric alcohol comprises propylene glycol or a mixture of propylene glycol and glycerol.

3. A method according to claim 1, wherein the top-up mix contains a dye such that the top-up mix is distinguishable from the coolant liquid.

## Patentansprüche

1. Ein Verfahren zum Entgiften eines Kühlmittelsystems, das eine Kühlflüssigkeit enthält, die Wasser und Ethylenglykol beinhaltet, wobei das Verfahren die folgenden Schritte beinhaltet:
(a) Entnehmen eines vorbestimmten Volumens der Kühlmittelflüssigkeit aus dem Kühlmittelsystem, wobei die vorbestimmte Menge 8 bis 15 % des Volumens des Kühlmittelsystems beträgt;
(b) Auffüllen des Kühlmittelsystems mit einer Nachfüllmischung, die mindestens 90 Volumen-% eines mehrwertigen Alkohols mit einem Siedepunkt über 150 °C und einer Reaktivität als Alkoholdehydrogenaseenzyminhibitor beinhaltet, wobei im Wesentlichen der gesamte Rest der Nachfüllmischung Korrosionsinhibitor, Wasser und zufällige Bestandteile beinhaltet, wobei die Menge der Nachfüllmischung mindestens 90 Volumen-% des in Schritt (a) entnommenen vorbestimmten Volumens beträgt.

2. Verfahren gemäß Anspruch 1, wobei der mehrwertige Alkohol Propylenglykol oder eine Mischung aus Propylenglykol und Glycerin beinhaltet.

3. Verfahren gemäß Anspruch 1, wobei die Nachfüllmischung einen Farbstoff enthält, sodass die Nachfüllmischung von der Kühlflüssigkeit unterscheidbar ist.

## Revendications

1. Un procédé de détoxication d'un système de refroidissement contenant un liquide de refroidissement comprenant de l'eau et de l'éthylène glycol, lequel procédé comprend les étapes consistant :
(a) à retirer du système de refroidissement un volume prédéterminé du liquide de refroidissement, la quantité prédéterminée faisant de 8 à 15 % du volume du système de refroidissement ;
(b) à recompléter le système de refroidissement avec un mélange de remplissage comprenant au moins 90 % en volume d'un alcool polyhydrique ayant un point d'ébullition au-dessus de 150 °C et une réactivité en tant qu'inhibiteur de l'enzyme alcool déshydrogénase, substantiellement tout le reste du mélange de remplissage comprenant un inhibiteur de corrosion, de l'eau et des ingrédients accessoires, la quantité du mélange de remplissage faisant au moins 90 % en volume du volume prédéterminé retiré à l'étape (a).

2. Un procédé selon la revendication 1, dans lequel l'alcool polyhydrique comprend du propylène glycol ou un mélange de propylène glycol et de glycérol.

3. Un procédé selon la revendication 1, dans lequel le mélange de remplissage contient un colorant de telle sorte que le mélange de remplissage est distinguable du liquide de refroidissement.
